# EUROPÄISCHE PATENTSCHRIFT

(11) **EP 2 715 683 B1**
(45) Veröffentlichungstag und Bekanntmachung des Hinweises auf die Patenterteilung: **07.02.2018**
(21) Anmeldenummer: 12729393.4
(22) Anmeldetag: 01.06.2012
(51) Int. Cl.: G07D 7/04, G07D 7/12

(54) **SENSORKARTE UND VERIFIKATIONSVERFAHREN ZUR MAGNETISCHEN UND OPTISCHEN PRÜFUNG VON DOKUMENTEN**
SENSOR CARD AND A VERIFICATION METHOD FOR MAGNETICALLY AND OPTICALLY EXAMINING DOCUMENTS
CARTE CAPTEUR ET PROCÉDÉ DE VÉRIFICATION POUR LE CONTRÔLE MAGNÉTIQUE ET OPTIQUE DE DOCUMENTS

(30) Priorität: 01.06.2011 DE 102011076865
(43) Veröffentlichungstag der Anmeldung: 09.04.2014
(73) Patentinhaber: Bundesdruckerei GmbH, 10969 Berlin (DE)
(72) Erfinder: WOLF, Andreas, 07743 Jena (DE); RABELER, Uwe, 30453 Hannover (DE)
(74) Vertreter: Obst, Bernhard
(86) Internationale Anmeldenummer: PCT/EP2012/060378
(87) Internationale Veröffentlichungsnummer: WO 2012/164069

(56) Entgegenhaltungen:
- EP-A1- 1 103 931
- EP-A2- 0 907 151
- WO-A2-02/059840
- WO-A2-2010/151305
- DE-B3-102007 031 230

## Beschreibung

Die Erfindung betrifft eine Sensorkarte, ein Verifikationssystem sowie ein Verifikationsverfahren, mit denen eine Prüfung von Sicherheitsdokumenten im Hinblick auf magnetische Merkmale und gegebenenfalls auch auf optisch erfassbare Merkmale möglich ist.

Als Sicherheitsdokumente werden Dokumente bezeichnet, die mindestens ein Merkmal aufweisen, welches eine Nachahmung, Verfälschung und/oder ein unautorisiertes Herstellen des entsprechenden Dokuments zumindest deutlich erschwert oder unmöglich macht. Ein solches Merkmal wird als Sicherheitsmerkmal bezeichnet. Sicherheitsmerkmale können eine Stoffbeschaffenheit oder Materialzusammensetzung eines Substrats oder eines Dokumentkörpers des entsprechenden Dokuments oder auf oder in den Dokumentkörper eingebrachte oder eingearbeitete andere Merkmale sein. Diese können beispielsweise unterschiedliche Druckverfahren, eine Verwendung von speziellen Farbmitteln, metallische oder magnetische Stoffe, Prägungen, Hologramme, Perforationen, integrierte Mikrochips oder Ähnliches umfassen, um nur einige beispielhaft aufzuzählen. Solche mit Sicherheitsmerkmalen versehene Sicherheitsdokumente umfassen beispielsweise Personaldokumente wie Reisepässe, Personalausweise, Identifikationskarten, ferner Führerscheine, Bankkarten, Kreditkarten, Telefonkarten, aber auch solche Dokumente, die unmittelbar einen Wert verkörpern, beispielsweise Banknoten, Postwertzeichen, Zollmarken, Eintrittskarten oder auch Etiketten zur Absicherung von Originalprodukten oder Visa und Ähnliches.

Für den Gebrauch von Sicherheitsdokumenten ist es unerlässlich, dass zumindest einzelne, eine Gruppe oder alle Sicherheitsmerkmale, die in dem Sicherheitsdokument enthalten sind, ausgewertet und hinsichtlich ihres Inhalts oder ihrer Echtheit und Unversehrtheit geprüft werden, um entweder das Dokument selbst als echt und gegebenenfalls darüber hinaus in dem Dokument oder den Sicherheitsmerkmalen gespeicherte Informationen als zutreffend und korrekt zu kennzeichnen. Die Sicherheitsmerkmale einer Banknote werden beispielsweise geprüft, um sicherzustellen, dass es sich um gesetzliches Zahlungsmittel handelt und der auf der Banknote verbriefte Wert dem tatsächlichen Wert des Sicherheitsdokuments entspricht. Bei einem Personalausweis oder Reisepass werden die Sicherheitsmerkmale geprüft, um sicherzustellen, dass die in dem Sicherheitsdokument gespeicherten Informationen unverfälscht sind und der Personalausweis oder der Reisepass tatsächlich von der Behörde ausgestellt sind, welche einer dem Sicherheitsdokument zugeordneten Person bestimmte Informationen, beispielsweise dessen Namen, Geburtsort, Geburtsdatum, Anschrift, aber auch biometrische Daten wie das Aussehen, einen Fingerabdruck und Ähnliches autorisiert zuordnet.

Die unterschiedlichen Sicherheitsmerkmale können über unterschiedlichste Verfahren hinsichtlich ihrer Echtheit und Unversehrtheit geprüft werden. Bei Banknoten können beispielsweise einige Merkmale haptisch über ein Tasten erfasst werden. Hierzu zählen beispielsweise mittels Stichtiefdruck auf eine äußere Oberfläche aufgedruckte Informationen. In einem Mikrochip gespeicherte, in der Regel digitalisierte Daten können beispielsweise mit einer speziellen Lesevorrichtung ausgelesen und mittels Rechen- und Auswerteverfahren oder eines Abgleichs gegenüber Vergleichsdaten einer Datenbank auf ihre Echtheit und Unversehrtheit geprüft werden. Ebenso verhält es sich mit beispielsweise magnetisch gespeicherten Informationen in einem Sicherheitsdokument. Diese werden über eine Wechselwirkung mit einem Magnetsensor ausgelesen und anschließend ausgewertet und verifiziert.

Die weitaus häufigsten verwendeten Sicherheitsmerkmale werden jedoch optisch ausgewertet. Hierbei werden Farbeindrücke, eine relative Anordnung der einzelnen aufgebrachten Informationen und Ähnliches geprüft. Darüber hinaus lassen sich auch Eigenschaften spezieller verwendeter Farbmittel optisch verifizieren. Beispielsweise zeigen einige verwendete Farbmittel eine Lumineszenzstrahlung bei einer Anregung, beispielsweise mit ultraviolettem Licht.

Wieder andere Sicherheitsmerkmale, welche optisch verifiziert werden können, sind Hologramme, deren gespeicherte Informationen bei geeigneter Beleuchtungs- und Betrachtungsgeometrie, beispielsweise als dreidimensionale Bildinformationen oder als abhängig von der Betrachtungs- und/oder Beleuchtungsrichtung wahrnehmbare bewegte und/oder ihre Information ändernde grafische Darstellungen, wahrnehmbar sind.

Zwar ist eine Vielzahl von Merkmalen, welche in Sicherheitsdokumenten enthalten sind, bereits durch einen menschlichen Betrachter ohne Zuhilfenahme weiterer technischer Hilfsmittel verifizierbar, jedoch lassen sich Manipulationen und Fälschungen von einigen Sicherheitsmerkmalen nur mithilfe technischer Hilfsmittel aufdecken und erkennen. Wieder andere Sicherheitsmerkmale, welche beispielsweise darin bestehen, dass die bei unterschiedlichen Beleuchtungsarten wahrnehmbaren optischen Informationen leicht unterschiedlich sind, lassen sich durch einen menschlichen Betrachter nur schwer oder gar nicht verifizieren, da die unterschiedlichen Informationen nicht zeitgleich und überlagert durch einen menschlichen Nutzer wahrnehmbar sind.

Aus dem Stand der Technik sind daher auch Vorrichtungen bekannt, mit denen Sicherheitsdokumente verifizierbar sind. Die DE 10 2007 031 230 B3 beschreibt ein Verfahren zum Erfassen von Dokumenten und ein Dokumentenerfassungssystem zum optischen Erfassen eines Dokuments, umfassend mindestens ein Leuchtmittel zum Beleuchten des Dokuments, mindestens einen optischen Sensor und eine Abbildungsoptik zum Abbilden des Dokuments auf dem mindestens einen optischen Sensor, wobei das mindestens eine Leuchtmittel mit einer Ausleuchtungsoptik gekoppelt ist, die eine größtmögliche homogene Ausleuchtung des Dokuments ermöglicht. Die beschriebene Vorrichtung und das beschriebene Verfahren ermöglichen es, auch großflächig ausgebildete Dokumente zeitgleich in einem nicht abtastenden Erfassungsschritt zu erfassen und anschließend die optisch gewonnenen Daten auszuwerten. Eine solche speziell für die Dokumentenverifikation vorgesehene Vorrichtung ist jedoch aufwendig und teuer.

Weitaus seltener werden bei Sicherheitsdokumenten Sicherheitsmerkmale nachgebildet, welche nur mit technischen Hilfsmitteln verifizierbar sind. Insbesondere die Verwendung von Materialien, welche eine magnetische Wechselwirkung zeigen, ist jedoch zuverlässig verifizierbar. So ist es beispielsweise seit Langem üblich, Sicherheitsfäden aus Metall aus Materialen herzustellen, welche ein unterschiedliches magnetisches Verhalten aufweisen, und hierüber Informationen, beispielsweise einen Wert eines Sicherheitsdokuments, zu speichern. Ebenso sind im Stand der Technik Druckzubereitungen bekannt, welche magnetische Materialien enthalten, die eine Wechselwirkung mit Magnetfeldern zeigen.

Aus der DE 10 2008 061 507 A1 ist ein Magnetsensor zur Prüfung eines Wertdokuments bekannt, der eine erste Magnetsensorzeile aufweist, die mehrere magnetosensitive Elemente mit einer ersten Hauptempfindlichkeitsrichtung aufweist, und der eine zweite Magnetsensorzeile aufweist, die mehrere magnetosensitive Elemente mit einer zweiten Hauptempfindlichkeitsrichtung aufweist, die von der ersten Hauptempfindlichkeitsrichtung verschieden ist. Mit einem solchen Magnetsensor können beispielsweise Wertdokumente verifiziert werden, welche magnetische Codierungen aus zwei verschieden koerzitiven Magnetmaterialien enthalten.

Die EP 1 103 931 A1 beschreibt einen Gegenstand des täglichen Gebrauchs, beispielsweise einen Kugelschreiber, bestehend aus einem Gehäusemittel, einer Gehäusespitze und einem Gehäuseende, in dem eine Elektrodenschaltung zur Baknotenerkennung integriert ist. Dazu weist das Gehäusemittel des Kugelschreibers eine durch den Klemmbügel verdeckte Ausnehmung auf, in welche die Elektroden-Schaltung hineinpasst. Die Elektroden-Schaltung umfasst einen kapazitiven Sensor zur Registrierung des Kapazitätsmusters einer Banknote, welche zwischen dem Klemmbügel und dem Gehäusemittel hindurchgezogen wird. Mit einem ebenfalls in die Elektroden-Schaltung integrierten Mikrochip wird ein Erkennungsresultat berechnet, welches dem Benutzer mit Hilfe zweier in das Gehäusemittel integrierter LED's angezeigt wird.

Die DE 10 2007 031 230 B3 beschreibt ein Verfahren zur Erfassung von Dokumenten und ein Dokumentenerfassungssystem zum optischen Erfassen eines Dokuments, umfassend mindestens ein Leuchtmittel zum Beleuchten des Dokuments, mindestens einen optischen Sensor und eine Abbildungsoptik zum Abbilden eines Dokuments auf dem mindestens einen optischen Sensor, wobei das mindestens eine Leuchtmittel mit einer Ausleuchtungsoptik gekoppelt ist, die eine möglichst homogene Ausleuchtung des Dokuments ermöglicht.

Die EP 0 907 151 A2 beschreibt eine Lese- und Validierungsvorrichtung für Dokumente mit einem magnetischen Strichcode. In einem von Hand bewegbaren Gehäuse ist ein von einem Permanentmagneten flankierter Lesekopf enthalten, der mit einer Datenverarbeitungseinheit verbunden ist, die wiederum mit einer in dem Gehäuse angeordneten Anzeige verbunden ist.

Die WO 2010/151305 A2 zeigt eine kompakte optische Messeinrichtung, die Menschen mit einer Sehbehinderung z.B. das Erkennen des Werts einer Banknote erleichtern soll.

Die aus dem Stand der Technik bekannten Prüfvorrichtungen sind jedoch aufwendig und daher nicht geeignet, dezentralisiert und kostengünstig eingesetzt zu werden.

Der Erfindung liegt daher die Aufgabe zugrunde, ein Verifikationssystem, eine Verifikationsvorrichtung in kleiner kompakter Bauform bzw. mit Komponenten in kleiner kompakter Bauform sowie ein geeignetes Verifikationsverfahren zu schaffen.

Der Erfindung liegt der Gedanke zugrunde, eine Prüfvorrichtung in Form einer Sensorkarte bereitzustellen, die hinsichtlich ihrer Abmessungen im Wesentlichen denen einer Scheck- oder Kreditkarte entspricht. In diese werden geeignete Magnetsensoren sowie eine Anregungseinheit integriert, um eine magnetische Wechselwirkung zwischen in einem Sicherheitsdokument enthaltenen magnetischen Materialien und den Magnetsensoren herbeizuführen und hierüber eine Verifikation des Sicherheitsdokuments zu ermöglichen, welches anliegend an die Verifikationsvorrichtung angeordnet ist. Um eine Verifikationsmessung auszulösen und ein Prüfergebnis auszugeben, weist die Prüfvorrichtung eine Schnittstelle auf. Bei einem besonders bevorzugten Prüfsystem wird eine Sensorkarte für eine Dokumentprüfung geschaffen, welche einen aus einem oder mehreren Kunststoffmaterialien hergestellten Kartenkörper umfasst, in dessen Innerem eine Energiequelle, mindestens eine magnetische Anregungseinheit, mehrere Magnetsensoren, eine Auswerte- und Steuereinrichtung sowie mindestens eine Schnittstelle zum Empfangen von Steuerbefehlen und/oder Ausgeben von Prüfergebnissen integriert sind, wobei die Auswerte- und Steuereinrichtung ausgebildet ist, auf einen von der Schnittstelle empfangenen Steuerbefehl die mindestens eine magnetische Anregungseinheit zu aktivieren, so dass angrenzend an die mindestens eine Oberfläche des Kartenkörpers ein magnetischer Fluss verändert wird, und mindestens einen der mehreren Magnetsensoren auszulesen und das Messergebnis auszuwerten, um zu prüfen, ob in einem Messgebiet angrenzend an die eine Oberfläche des Kartenkörpers, in der die magnetische Flussänderung bewirkt wird, magnetische Materialien angeordnet sind, um über die mindestens eine Schnittstelle das Prüfergebnis auszugeben. Eine solche Sensorkarte kann beispielsweise mit einem Mobilfunktelefon zusammenwirken, welches eine Schnittstelle zum Ausbilden einer nicht langreichweitigen Kommunikationsverbindung umfasst, so dass zwischen der Schnittstelle der Sensorkarte und der Schnittstelle des Mobilfunktelefons eine Kommunikationsverbindung ausgebildet wird und das Mobilfunktelefon zumindest zum Erfassen von Nutzereingaben und zum Ausgeben von Prüfergebnissen verwendet wird. Eine Steuerung einer Prüfung kann hierbei über eine Anwendung oder Applikation erfolgen, welcher auf einer Prozessoreinheit des Mobilfunktelefons ausgeführt wird.

Ein bevorzugtes Verifikationssystem für Sicherheitsdokumente, umfassend eine oben beschriebene Sensorkarte sowie ein Mobilfunktelefon mit mindestens einer Eingabevorrichtung, mindestens einer Ausgabevorrichtung, einer programmgesteuerten Prozessoreinheit, einem Speicher sowie einer zu der mindestens einen Schnittstelle der Sensorkarte kompatiblen kurzreichweitigen Schnittstelle, wobei in dem Speicher eine in Software ausgeführte Applikation gespeichert ist, bei deren Aufruf und Ausführung auf der Prozessoreinheit über die kurzreichweitige, drahtlose Schnittstelle mindestens der eine Steuerbefehl ausgegeben wird, um eine magnetische Prüfung eines anliegend an die Sensorkarte angeordneten Sicherheitsdokuments auszulösen und zu steuern und über die kurzreichweitige, drahtlose Schnittstelle des Mobilfunktelefons das Prüfergebnis erfasst wird, wobei die Applikation ausgebildet ist, ein Prüfergebnis über eine Ausgabevorrichtung des Mobilfunktelefons auszugeben. Über das Mobilfunktelefon können somit eine Erfassung von Nutzereingaben sowie eine Ausgabe von Ergebnissen an einen Nutzer erfolgen.

Ein Prüfverfahren umfasst die Schritte: Erfassen eines Steuerbefehls, Aktivieren der mindestens einen magnetischen Anregungseinheit, so dass angrenzend an mindestens eine Oberfläche eines Kartenkörpers ein magnetischer Fluss verändert wird, Auslesen mindestens eines von mehreren Magnetsensoren, Auswerten des mindestens einen ausgelesenen Messergebnisses, um zu prüfen, ob in einem Messgebiet angrenzend an die Oberfläche des Kartenkörpers magnetische Materialien angeordnet sind, und Ausgeben des Prüfergebnisses über mindestens eine Schnittstelle.

### Definitionen

Als Kartenkörper wird ein flacher scheck- oder bankkartenähnlicher Körper bezeichnet, welcher zwei einander gegenüberliegende äußere Oberflächen aufweist, deren flächige Erstreckung wesentlich größer als die die beiden äußeren Hauptflächen verbindenden Stirnflächen sind. Vorzugsweise weist ein Kartenkörper eine Gestalt ähnlich der von ID1- oder ID2-Sicherheitsdokumenten auf.

Magnetische Materialien sind solche Materialien, die eine magnetische Wechselwirkung zeigen. Bevorzugt werden ferromagnetische Materialien als magnetische Materialien verwendet, die magnetisierbar sind.

Eine magnetische Anregungseinheit ist eine technische Einrichtung, mit der ein magnetischer Fluss erzeugbar ist oder erzeugt wird, um magnetische Materialien magnetisieren zu können.

Ein Magnetsensor ist ein Sensor, welcher in der Lage ist, einen magnetischen Fluss zu messen. Magnetsensoren können allgemein unterschiedlich ausgestaltet sein und unterschiedliche Wirkprinzipien zur Messung des magnetischen Flusses ausnutzen. Bekannt sind induktiv messende Magnetsensoren, welche beispielsweise Leiterschleifen oder Spulen umfassen, magnetoresistive messende Magnetsensoren, die abhängig vom herrschenden magnetischen Fluss eine Widerstandsänderung zeigen, oder auch nach dem Halleffekt wirkende Magnetsensoren, die Hallsensoren umfassen, an denen eine von dem magnetischen Fluss abhängige Spannung auftritt.

Ein Mobilfunktelefon ist eine Kommunikationseinrichtung, welche in ein Telefonnetz, welches eine drahtlose Funkkommunikation für eine langreichweitige Übertragung nutzt, eingebunden werden kann. Im Stand der Technik sind unterschiedliche Übertragungsprotokolle, wie beispielsweise GSM oder UMTS, bekannt, die eine Sprach- und/oder Datenkommunikation ermöglichen.

Als langreichweitige drahtlose Kommunikation wird eine Kommunikation bezeichnet, welche ausgebildet ist, Übertragungsstrecken zu überbrücken, welche einige Kilometer auch in bebauten Gebieten ermöglichen.

Als Schnittstellen für eine kurzreichweitige drahtlose Übertragung werden all jene Schnittstellen für Kommunikationsverfahren angesehen, bei denen die für die Übertragung verwendete Sendeleistung im jeweiligen Frequenzbereich der hierfür verwendeten elektromagnetischen Strahlung zumindest in mit Gebäuden bebauten Gebieten nicht ausreicht, um Distanzen von einigen Kilometern zu überbrücken.

Als Schnittstellen für kurzreichweitige Kommunikationsverfahren werden Bluetooth-Schnittstellen, WLAN-Schnittstellen oder auch Nahfeldkommunikationsschnittstellen (NFC-Schnittstellen) angesehen.

### Bevorzugte Ausführungsformen

Ein einfacher und kompakter Aufbau lässt sich erreichen, wenn die mehreren Magnetsensoren jeweils als Ebene, eine Leiterschleifenebene aufweisende Leiterschleife ausgebildet sind oder werden. Als Leiterschleifenebene wird hier eine gedachte Ebene bezeichnet, in welcher die Leiterschleife angeordnet ist.

Um eine möglichst feingranulare Aufteilung des Messgebiets in unterschiedliche Auswertegebiete angrenzend an die Oberfläche des Kartenkörpers der Sensorkarte zu erhalten, ist es vorteilhaft, wenn die mehreren Leiterschleifen der mehreren Magnetsensoren in mehreren Anordnungsebenen in dem Kartenkörper angeordnet sind, wobei sich die auf die Oberfläche senkrecht projizierten Leiterschleifenabbilder überlappen.

Eine an einem Ort angrenzend an die Oberfläche des Kartenkörpers der Sensorkarte herbeigeführte Magnetflussänderung wirkt durch an diesem Ort angeordnete magnetische Materialien, die wiederum eine magnetische Flussänderung in den unterschiedlichen Sensorleiterschleifen beeinflussen. Flussänderungen können über induzierte Ströme erfasst werden. Über eine gezielte Auswertung kann ein Messgebiet angrenzend an die Oberfläche des Kartenkörpers feingranular in Auswertegebiete unterteilt werden, welche eine höhere Granularität aufweisen als die einzelnen Magnetsensoren zugeordneten Messgebiete.

Um eine hohe Sensorleiterschleifendichte realisieren zu können, sind die Sensorleiterschleifen, vorzugsweise als regelmäßige Vielecke, beispielsweise Dreiecke, Quadrate oder Sechsecke, beispielsweise bienenwabenförmig, in der jeweiligen Anordnungsebene ausgebildet. Die einzelnen Ebenen sind vorzugsweise planparallel zu der Oberfläche des Kartenkörpers ausgebildet, welche ebenfalls plan ausgebildet ist.

Auch die Anregungseinheit umfasst vorzugsweise eine oder mehrere Leiterschleifen, die als Anregungsleiterschleifen bezeichnet werden. Bei einer besonders bevorzugten Ausführungsform sind in einer Anordnungsebene, in der mehrere als Sensorleiterschleifen ausgebildete Magnetsensoren angeordnet sind, deren Leiterschleifenebenen mit der Anordnungsebene zusammenfallen, auch ein oder mehrere Anregungsleiterschleifen ausgebildet, welche als magnetische Anregungseinheit dienen. Hierbei umschließt eine als Anregungseinheit genutzte Anregungsleiterschleife vorzugsweise mehrere als Magnetsensoren genutzte Sensorleiterschleifen. Durch das Vorsehen mehrerer unterschiedlich ausgebildeter und/oder verschachtelter Anregungsleiterschleifen kann die lokale Auflösung weiter gesteigert werden. Durch die Verwendung mehrerer Anregungsleiterschleifen, welche gezielt aktiv zur Anregung genutzt werden können, kann die Anregung relativ zu den einzelnen als Magnetsensoren verwendeten Sensorleiterschleifen variiert werden, so dass eine lokalisierte Messung der magnetischen Eigenschaften anliegend an die Oberfläche des Kartenkörpers der Sensorkarte möglich wird.

Eine Steuerung sowohl der Anregungseinheit als auch ein Auslesen der Magnetsensoren wird über die in der Auswerte- und Steuereinrichtung der Sensorkarte gesteuert. Ferner wird eine Auswertung der Messergebnisse der einzelnen Magnetsensoren, auch in Beziehung zu der magnetischen Anregung vor oder während des Erfassens der Messergebnisse mit den Magnetsensoren, in der Auswerte- und Steuereinrichtung ausgeführt.

Ein Magnetisierungsverhalten in einem Messgebiet angrenzend an die Oberfläche der Sensorkarte lässt sich besonders gut vermessen, wenn die magnetische Anregung zeitlich moduliert wird. Dies bedeutet, dass ein durch die mindestens eine magnetische Anregungseinheit bewirkter magnetischer Fluss hinsichtlich seiner Stärke und/oder Orientierung im Raum zeitlich variiert wird.

Die Steuer- und Auswerteeinrichtung ist bei einer Ausführungsform ausgebildet, die mindestens eine Anregungseinheit so anzusteuern, dass der magnetische Fluss zeitlich moduliert wird.

Eine zum Betreiben der Anregungseinheit, der Auswerte- und Steuereinrichtung sowie der Schnittstelle benötigte Energie wird der Energiequelle entnommen. Bei der Energiequelle kann es sich um eine Batterie oder einen wiederaufladbaren Akkumulator handeln. Bei einigen Ausführungsformen, bei denen die Schnittstelle als Nahfeldkommunikationsschnittstelle ausgebildet ist, welche eine Sende- und Empfangsantenne umfasst, kann auch eine Energieeinkopplung mittels eines Hochfrequenzfelds in die Sensorkarte erfolgen.

Eine sehr viel größere Vielseitigkeit bei der Prüfung von Sicherheitsdokumenten lässt sich mit einer Sensorkarte erreichen, die zusätzlich zu den magnetischen Eigenschaften auch Sicherheitsmerkmale analysieren kann, welche einer optischen Erfassung zugänglich sind.

Bei einer Ausführungsform ist daher vorgesehen, dass im Innern des Kartenkörpers zusätzlich mindestens ein zweidimensional Bildpunkte auflösender, flächig ausgebildeter photoempfindlicher Sensor angeordnet ist, wobei der Kartenkörper zwischen einer Auflagefläche und einer Detektionsseite des photoempfindlichen Sensors für Licht mindestens eines Wellenlängenbereichs transparent ausgebildet ist und benachbart zu dem photoempfindlichen Sensor im Kartenkörper Leuchtmittel angeordnet sind, mit welchen eine auf der Auflagefläche anliegender Gegenstand beleuchtbar ist, und die Steuer- und Auswerteeinrichtung ausgebildet ist, auf einen weiteren Steuerbefehl alternativ oder zusätzlich die Leuchtmittel anzusteuern, um die Auflagefläche zu beleuchten und mittels des photoempfindlichen Sensors mindestens eine Abbildung der Auflagefläche oder eines daran anliegenden Gegenstands zu erfassen und die Abbildungsdaten entweder einerseits auszuwerten und ein Messergebnis über die mindestens eine Schnittstelle auszugeben oder andererseits die Abbildungsdaten über die mindestens eine Schnittstelle auszugeben.

Als Auflagefläche wird hier eine Hauptoberfläche des Kartenkörpers der Sensorkarte angesehen. Als Auflagefläche wird bei einer Ausführungsform dieselbe Oberfläche des Kartenkörpers genutzt, anliegend an die auch magnetische Eigenschaften eines Wert- oder Sicherheitsdokuments ermittelbar sind.

Andere Ausführungsformen können vorsehen, dass die magnetischen Eigenschaften eines Sicherheitsdokuments anliegend an die eine Oberfläche des Kartenkörpers der Sensorkarte ermittelbar sind, und optisch verifizierbare Sicherheitsmerkmale bei einem An- bzw. Auflegen auf die gegenüberliegende Oberfläche mittels des photoempfindlichen Sensors erfassbar sind.

Bei einer Weiterbildung der Erfindung wird daher ein weiterer Steuerbefehl mittels der mindestens einen Schnittstelle erfasst und mittels eines zweidimensional auflösenden, Bildpunkte erfassenden photoempfindlichen Sensors eine zweidimensionale Abbildung eines an der Auflagefläche des Kartenkörpers der Sensorkarte anliegenden Gegenstands erfasst und ausgewertet.

Bevorzugt sind die Leuchtmittel, die zum Beleuchten des Gegenstands anliegend an die Auflagefläche verwendet werden, in einer geringeren Tiefe als der photoempfindliche Detektor bezüglich der Auflagefläche in dem Kartenkörper angeordnet. Hierdurch wird es möglich, mit Leuchtmitteln, welche benachbart, beispielsweise umlaufend um den photoempfindlichen Sensor angeordnet sind, eine gesamte erfassbare Fläche "über" dem photoempfindlichen Detektor zu beleuchten.

Das Erfassen der Abbildung erfolgt in der Weise, dass die Auflagefläche während des Erfassens der mindestens einen Abbildung durch Leuchtmittel in dem Kartenkörper beleuchtet wird.

Eine präzise Abbildung der grafischen Inhalte eines Gegenstands, welcher angrenzend an die Auflagefläche auf der Sensorkarte angeordnet ist, erhält man bei einer Ausführungsform, bei der ein Mikrolinsenarray angrenzend an den photoempfindlichen Sensor im Innern des Kartenkörpers ausgebildet ist. Einzelnen Bildpunkten sind hierbei vorzugsweise einzelne Mikrolinsenelemente zugeordnet. Jede Mikrolinse bildet somit einen Teilbereich der Auflagefläche auf den photoempfindlichen Sensor ab.

Um eine Vielzahl unterschiedlicher Sicherheitsmerkmale verifizieren zu können, ist es vorteilhaft, wenn die Leuchtmittel unterschiedliche Gruppen von Leuchtmitteln umfassen, die Licht unterschiedlicher Wellenlängenbereiche emittieren und getrennt und/oder gemeinsam zur Beleuchtung eines an der Auflagefläche anliegenden Gegenstands angesteuert werden können.

Mindestens eine kurzreichweitige drahtlose Schnittstelle ist vorzugsweise als Nahfeldkommunikationsschnittstelle oder Bluetooth-Schnittstelle ausgebildet. Beides sind Schnittstellentechnologien, welche weit verbreitet sind und in Mobilfunktelefone integriert werden, um eine lokale Kommunikation zwischen verschiedenen Mobilfunktelefonen oder anderen Peripheriegeräten zu ermöglichen. Ein Vorteil einer Nahfeldkommunikationsschnittstelle besteht darin, dass eine solche in einem Passivmodus betrieben werden kann, bei dem zum Ausbilden der Kommunikationsverbindung keine Energie durch die Schnittstelle der Sensorkarte aufgewandt werden muss. Dies bedeutet, dass die Energie vollständig über ein elektromagnetisches Hochfrequenzfeld der entsprechend aktiven Schnittstelle eines Gegengerätes in die Sensorkarte eingekoppelt wird. Hierüber eingekoppelte Energie kann auch genutzt werden, um einen zusätzlich vorhandenen Akkumulator nachzuladen.

Bei anderen einfachen Ausführungsformen kann die mindestens eine Schnittstelle in dem Kartenkörper mittels eines haptischen Bedienelements zur Steuerbefehlserfassung ausgebildet sein. Die mindestens eine Schnittstelle kann ferner ein Display zum Ausgeben der Prüfergebnisse umfassen.

Bei einer Ausführungsform ist die Steuer- und Auswerteeinrichtung ausgebildet, die Messergebnisse mehrerer Magnetsensoren gemeinsam auszuwerten, um eine feingranulare Aufteilung des Messgebiets in Auswertegebiete zu erzielen.

Der von der Sensorkarte erfasste Steuerbefehl wird bei einer bevorzugten Ausführungsform von einer Anwendung bzw. Applikation eines Mobiltelefons gesendet. Diese wird durch einen Nutzer des Mobiltelefons gestartet, der anliegend an die Sensorkarte ein Sicherheitsdokument anordnet. Beispielsweise wird die Sensorkarte auf eine bestimmte Position eines zu prüfenden Sicherheitsdokuments aufgelegt und dann auf dem Mobiltelefon eine Prüf- und Verifikationsapplikation gestartet, die dann über die nicht langreichweitige Schnittstelle eine Kommunikationsverbindung mit der Sensorkarte ausbildet und auf dieser eine magnetische und/oder optische Prüfung auslöst.

Bei einer Ausführungsform ist vorgesehen, dass auf einer Ausgabevorrichtung des Mobilfunktelefons Anweisungen ausgegeben werden, wie das zu prüfende Dokument und die Sensorkarte relativ zueinander anzuordnen sind.

Da zur Auswertung von Abbildungsdaten häufig aufwendige Algorithmen verwendet werden, ist bei einer Ausführungsform vorgesehen, dass die Auswertung der mindestens einen Abbildung bzw. der Abbildungsdaten auf einer Prozessoreinheit des Mobilfunktelefons ausgeführt wird.

Bei einer weiteren Ausführungsform kann vorgesehen sein, dass die Sensorkarte und das Sicherheitsdokument während der Prüfung relativ zueinander zu bewegen sind. Das Mobilfunktelefon übermittelt vorzugsweise die Steuerbefehle an die Sensorkarte, die dann den eigentlichen Prüfablauf steuert. Für die Prüfung wird das zu prüfende Sicherheitsdokument mit der Sensorkarte in Kontakt gebracht.

Ein Vorteil der Erfindung besteht darin, dass eine solche hier beschriebene Sensorkarte durch einen Nutzer mitgeführt werden kann und im Bedarfsfall vor Ort einfach, beispielsweise als Banknoten ausgebildete, Sicherheitsdokumente, hinsichtlich ihrer Echtheit verifiziert werden können. Hierfür ist es bei einer Ausführungsform lediglich notwendig, die Sensorkarte in geeigneter Weise in Kontakt mit der Banknote zu bringen und eine Prüfung beispielsweise über in die Karte integrierte haptisches Bedienmittel zu aktivieren und anschließend ein Prüfergebnis beispielsweise über eine in die Sensorkarte integrierte Anzeigeeinheit ausgegeben zu erhalten. Auch einfache Ausgabemittel, welche beispielsweise bei einer Prüfung eines Wertdokuments auf Echtheit, Licht einer ersten Wellenlänge als Echtheitsbestätigung ausgeben, und im Fall einer negativ verlaufenden Prüfung, Licht einer zweiten Wellenlänge ausgeben, können in einfachen Ausführungsformen genutzt werden.

Komfortabler kann eine solche Sensorkarte gemeinsam mit einem Mobilfunktelefon verwendet werden, welches ein oder mehrere Ausgabevorrichtungen, beispielsweise ein farbiges Display und/oder einen Lautsprecher oder Ohrhörer umfasst. Der Lautsprecher oder Ohrhörer können zum akustischen Ausgeben des Prüfergebnisses verwendet werden. Durch die Verwendung eines Mobiltelefons, welches eine leistungsfähige Prozessoreinheit umfasst, können auch erfasste Abbildungsdaten mittels komplexer Auswertealgorithmen ausgewertet und hinsichtlich ihrer Echtheit überprüft werden, wobei die Sensorkarte lediglich eine Abbildungsdatenerfassung ausführen muss. Alle für die Sensorkarte notwendigen Elemente lassen sich in Baugrößen herstellen, welche in einen Kartenkörper integrierbar sind, so dass eine kleine kompakte Prüfvorrichtung in Form einer Sensorkarte geschaffen werden kann. Diese ist in der Lage, lokal aufgelöste magnetische Merkmale eines Sicherheitsdokuments zu erfassen und zu prüfen und gegebenenfalls zusätzlich ausgebildet, eine oder mehrere optische Abbildungen des Sicherheitsdokuments oder eines Ausschnitts hiervon zu erfassen und selbst auszuwerten oder für eine Auswertung bereitzustellen.

Nachfolgend wird die Erfindung unter Bezugnahme auf eine Zeichnung näher erläutert. Hierbei zeigen:
- Fig. 1: eine schematische Darstellung eines Verifikationssystems;
- Fig. 2: einen schematischen Aufbau einer Sensorkarte;
- Fig. 3: eine schematische Darstellung einer Anordnung von Sensorleiterschleifen und Anregungsleiterschleifen;
- Fig. 4: eine weitere schematische Darstellung von Sensorleiterschleifen und Anregungsleiterschleifen;
- Fig. 5: eine schematische Schnittdarstellung eines Ausschnitts einer Sensorkarte;
- Fig. 6: eine schematische Draufsicht auf einen Ausschnitt einer Sensorkarte; und
- Fig. 7: eine schematische Schnittdarstellung einer Sensorkarte.

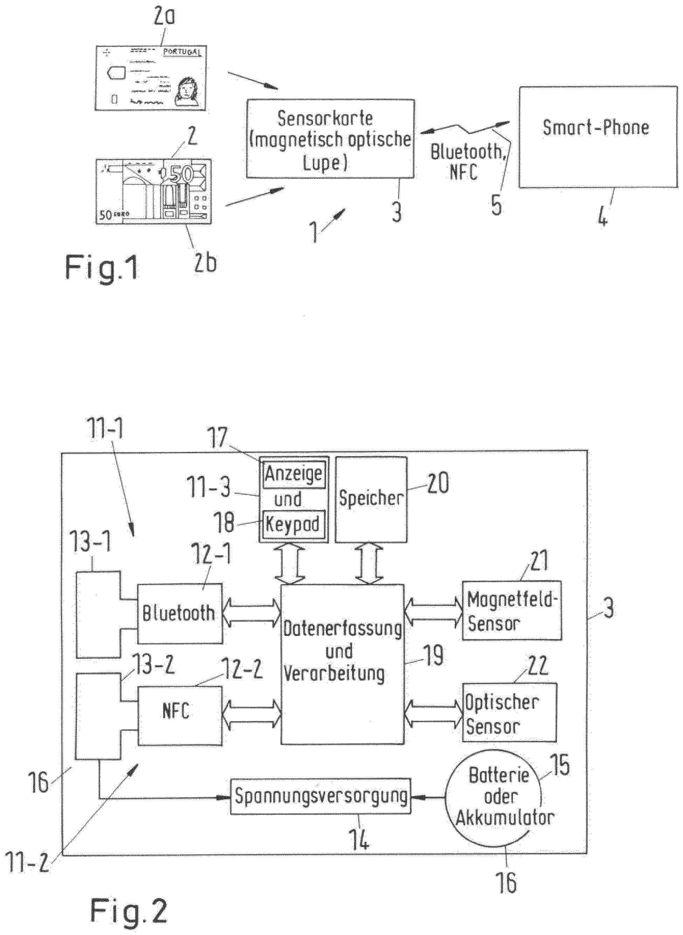

In Fig. 1 ist schematisch ein Prüfsystem 1 dargestellt. Dieses ist zum Überprüfen oder Verifizieren eines Sicherheitsdokuments 2 vorgesehen. Beispielhaft sind ein Ausweisdokument 2a und eine Banknote 2b als exemplarische Sicherheitsdokumente 2 dargestellt. Diese umfassen grafisch wahrnehmbare Sicherheitsmerkmale sowie magnetische Sicherheitsmerkmale.

Das Prüfsystem 1 umfasst eine Sensorkarte 3, welche in einer bevorzugten Ausführungsform sowohl Magnetsensoren als auch photoempfindliche Sensoren umfasst, um sowohl magnetische Merkmale als auch optisch erfassbare Merkmale der Sicherheitsdokumente 2 erfassen zu können. Die Sensorkarte 3 ist so ausgebildet, dass sie mit einem Mobilfunktelefon 4 eine drahtlose Kommunikationsverbindung 5 aufbauen kann. Das Mobilfunktelefon ist vorzugsweise als so genanntes Smartphone ausgebildet. Dies bedeutet, dass ein Mobilfunktelefon 4 so ausgebildet ist, dass es weitere Funktionalitäten neben der des Ausführens einer Sprachtelefonie über ein zellulär ausgebildetes Funktelefonnetz ausführen kann. In der Regel umfassen als Smartphone bezeichnete Mobilfunktelefone eine Prozessoreinheit und einen Speicher, in dem Programmdaten abgelegt sind. Über ein Ausführen der Programmdaten kann eine Vielzahl unterschiedlicher Funktionalitäten für einen Nutzer bereitgestellt werden. Hierfür umfasst das Mobilfunktelefon 4 in der Regel eine grafische Ausgabevorrichtung, welche gegebenenfalls mit einem ortsauflösenden Berührungs- oder Annäherungssensor verknüpft als so genannter Touchscreen ausgebildet ist. Moderne Mobilfunktelefone sind so ausgebildet, dass neue Anwendungen in den Speicher des Mobilfunktelefons übertragen werden können, um diese auf der Prozessoreinheit des Mobilfunktelefons auszuführen und hierüber zusätzliche Funktionalitäten bereitzustellen. Ein Erfassen von Nutzereingaben kann bei einigen Mobiltelefonen auch über ein getrennt von der grafischen Ausgabevorrichtung ausgebildetes Tastenfeld oder Ähnliches erfolgen.

Bei der drahtlosen Kommunikationsverbindung 5 zwischen der Sensorkarte 3 und dem Mobilfunktelefon 4 handelt es sich um eine Kommunikationsverbindung, welche über Schnittstellen ausgebildet wird, welche für eine kurzreichweitige Datenübertragung ausgebildet sind. Dies bedeutet, dass nicht die für das Einbinden in das Funktelefonnetz vorgesehene Schnittstelle des Mobilfunktelefons 4 genutzt wird, um die Kommunikationsverbindung 5 zwischen dem Mobilfunktelefon 4 und der Sensorkarte 3 auszubilden.

Bevorzugt wird die Kommunikationsverbindung 5 gemäß dem Bluetooth-Standard oder einem so genannten Nahfeldkommunikationsstandard ausgeführt. Bluetooth stellt einen drahtlosen Übertragungsstandard zur Überbrückung kurzer Entfernungen zwischen einem und hundert Metern dar, der in dem Industriestandard EEE802.15.1 normiert ist. Die so genannte NFC-Kommunikationsschnittstelle ist derzeit noch nicht abschließend normiert, baut jedoch auf den Standards ISO/IEC18092 und ISO/IEC1443 sowie dem japanischen Industriestandard JESX6319-4 auf.

Der Vorteil einer Nahfeldkommunikation nach dem NFC-Standard besteht darin, dass über die zur Übertragung genutzte Hochfrequenz auch Energie in eine Antenne eines Empfängers eingekoppelt werden kann, die der Empfänger zur Energieversorgung nutzen kann.

Das Prüfsystem 1 wird in der Weise genutzt, dass die Sensorkarte 3 mit einem der Sicherheitsdokumente 2 in Kontakt gebracht wird. Über eine Anwendung, welche auf dem Mobilfunktelefon 4 ausgeführt wird, wird ein Steuerbefehl über die Kommunikationsverbindung 5 an die Sensorkarte 3 übertragen. Diese führt dann gesteuert durch eine interne Steuerung, die in die Sensorkarte 3 integriert ist und getrennt von einer Steuerung oder der Anwendung des Mobilfunktelefons 4 ausgebildet ist, eine sensorische Erfassung von magnetischen Merkmalen und gegebenenfalls zusätzlich von optischen Merkmalen des Sicherheitsdokuments bzw. eines Ausschnitts des Sicherheitsdokuments durch. Aus den erfassten Sensordaten wird ein Prüfergebnis abgeleitet und über die Kommunikationsverbindung an das Mobilfunktelefon 4 übertragen. Dieses gibt das Prüfergebnis über dessen interne Ausgabevorrichtung an den Nutzer aus. Bei einigen Ausführungsformen werden die Abbildungsdaten, die von der Sensorkarte 3 erfasst sind, über die Kommunikationsverbindung 5 zu dem Mobilfunktelefon 4 übertragen, um dessen wesentlich leistungsfähigere Prozessoreinheit für eine Auswertung der Abbildungsdaten zu nutzen, die Prüfung des Sicherheitsdokuments auszuführen und ein Prüfergebnis abzuleiten. Bei der Prüfung wird ermittelt, ob in dem Sicherheitsdokument erwartete Sicherheitsmerkmale, beispielsweise bestimmte magnetisch codierte Informationen und/oder optische Sicherheitsmerkmale, korrekt ausgebildet sind.

In Fig. 2 ist schematisch eine Sensorkarte 3 als Blockschaltbild dargestellt. Gleiche technische Merkmale sind in allen Figuren mit denselben Bezugszeichen versehen.

Die Sensorkarte 3 umfasst in der dargestellten Ausführungsform zwei für eine kurzreichweitige Datenübermittlung ausgebildete Sensorkartenschnittstellen 11-1, 11-2. Die Sensorkartenschnittstelle 11-1 ist als Bluetooth-Schnittstelle ausgebildet. Die Sensorkartenschnittstelle 11-2 ist als NFC-Schnittstelle ausgebildet. Die Sensorschnittstellen 11-1, 11-2 umfassen jeweils eine integrierte elektronische Schaltung 12-1, 12-2, die mit einer Sende- und Empfangsantenne 13-1, 13-2 entsprechend verbunden sind. Die Antenne 13-2 kann ebenfalls genutzt werden, um Energie in die Sensorkarte einzukoppeln und hierüber eine Spannungsversorgung 14 bereitzustellen. Alternativ oder zusätzlich kann die Spannungsversorgung 14 über eine Batterie oder einen Akkumulator 15 bereitgestellt werden. Die Batterie bzw. der Akkumulator 15 sowie die Antenne 13-2 können als Bestandteil einer Energiequelle 16 der Sensorkarte 3 aufgefasst werden. Es versteht sich für den Fachmann, dass über die Antenne 13-2 eingekoppelte Energie auch zum Aufladen eines Akkumulators 15 genutzt werden kann.
Als weitere Schnittstelle 11-3 kann die Sensorkarte 3 in einer optionalen Ausführungsform zusätzlich eine Anzeigeeinrichtung 17 zum Ausgeben von Informationen sowie eine Bedieneinrichtung 18 umfassen. Die Anzeigeeinrichtung 17 kann in einer einfachen Ausführungsform ein oder mehrere Leuchtmittel umfassen, die zum Signalisieren von Informationen genutzt werden. Andere Ausführungsformen können vorsehen, dass die Anzeigeeinrichtung eine Segmentanzeige oder eine Matrixanzeige ist, beispielsweise eine LCD-Anzeige ist. Die Bedieneinrichtung 18 kann beispielsweise ein kapazitiv zu betätigendes Schaltelement oder ein Tastenfeld sein. Hier sind vielfältige Ausgestaltungen möglich.
Die Sensorkarte 3 umfasst ferner eine Auswerte- und Steuereinrichtung 19, die mit den Schnittstellen 11-1 bis 11-3 verbunden ist. Die Auswerte- und Steuereinrichtung 19 ist bei einer Ausführungsform mit einem Speicher 20 verknüpft, in dem ein Programmcode abgelegt ist, welcher die Funktionalität der Auswerte- und Steuereinrichtung festlegt. Die Auswerte- und Steuereinrichtung 19 kann beispielsweise als Mikrocontroller ausgebildet sein. Die Software kann in einem nur zum Lesen vorgesehenen ROM-Speicher in dem Mikrocontroller abgelegt sein. Anstelle eines Mikrocontrollers kann auch ein Field Programmable Gate Array (FPGA) mit einem integrierten Prozessor (CPU-Core), einem Bussystem sowie einem auf dem FPGA-Chip ausgebildeten Arbeitsspeicher (RAM) und nur Lesespeicher (ROM) ausgebildet sein. Abweichend von der Darstellung nach Fig. 2 kann somit der Speicher 20 mit der Auswerte- und Steuereinrichtung 19 in einer integrierten Schaltung ausgebildet sein.
Die Sensorkarte 3 umfasst ferner eine magnetische Messeinrichtung 21, mit der magnetische Merkmale eines anliegend an die Sensorkarte 3 angeordneten Sicherheitsdokuments erfasst werden können. Bei der Ausführungsform nach Fig. 2 ist die magnetische Messeinrichtung 21 als Magnetfeld-Sensor ausgebildet, der auch als Magnetsensor bezeichnet wird. Ferner umfasst die Sensorkarte 3 in einer bevorzugten Ausführungsform eine optische Messeinrichtung 22. Die optische Messeinrichtung 22 ist ausgebildet, optisch wahrnehmbare Sicherheitsmerkmale eines Sicherheitsdokuments, welches anliegend an die Sensorkarte angeordnet ist, erfassen zu können. Die optische Messeinrichtung umfasst hierfür mindestens einen photoempfindlichen Sensor.

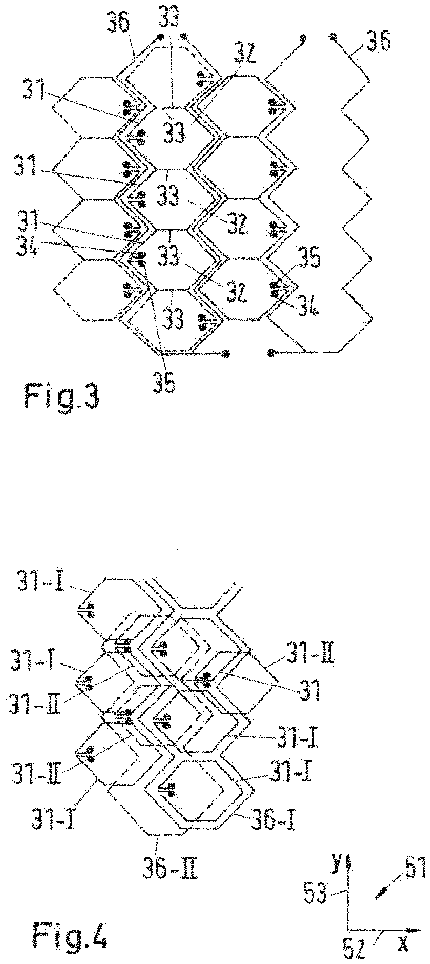

In Fig. 3 ist eine schematische Darstellung einer magnetischen Messeinrichtung 21 dargestellt. Die magnetische Messeinrichtung 21 umfasst in der dargestellten Ausführungsform eine Vielzahl von als Sensorleiterschleifen 31 ausgebildete Magnetsensoren 32. Alle dargestellten Sensorleiterschleifen 31 sind eben ausgebildet, so dass deren Leiterschleifenebene mit einer Zeichnungsebene zusammenfällt. Die einzelnen Sensorleiterschleifen 31 sind in der dargestellten Ausführungsform wabenförmig ausgebildet und so ausgebildet, dass einige Leitungsstränge 33 jeweils von aneinander angrenzenden Leiterschleifen 31 gemeinsam genutzt werden. Jede der Sensorleiterschleifen 31 weist zwei Kontaktstellen 34, 35 auf.

Zusätzlich sind in der dargestellten Ausführungsform Anregungsleiterschleifen 36 bzw. Erregerleiterschleifen angeordnet. Die Anregungsleiterschleifen 36 können bestromt werden, um ein Magnetfeld zu erzeugen. Dieses wird genutzt, um ein anliegend an die Sensorkarte angeordnetes Sicherheitsdokument bzw. darin enthaltene magnetische Materialien zu magnetisieren. Abhängig von der Existenz solcher magnetischer Materialien angrenzend an die Oberfläche der Sensorkarte 3 wird der von den Sensorleiterschleifen 31 gemessene Fluss unterschiedlich beeinflusst. Hierdurch ist eine Prüfung auf ein Vorhandensein von magnetischen Materialien sowie gegebenenfalls deren Eigenschaften abhängig von der durch die Anregungsleiterschleifen 36 erzeugten Flussänderung möglich. Durch ein Vorsehen mehrerer Sensorleiterschleifen 31 ist es möglich, ein Messgebiet, in dem durch die erzeugte magnetische Flussänderung eine Magnetisierung bewirkt wird, in eine Vielzahl von Auswertegebieten aufzuteilen, in denen eine vorhandene magnetische Eigenschaft lokal ausgewertet werden kann.

Eine weitere Ausführungsform ist in Fig. 4 dargestellt. Dort ist eine Projektion von in unterschiedlichen Ebenen angeordneten Sensorleiterschleifen 31 und Anregungsleiterschleifen 36 auf die Oberfläche der Sensorkarte schematisch dargestellt. Zu erkennen ist, dass die einzelnen Sensorleiterschleifen 31 und gegebenenfalls auch Anregungsleiterschleifen 36 in den unterschiedlichen Ebenen versetzt zueinander angeordnet sind. Die Zuordnung zu den Ebenen ist über nachgestellte römische Ziffern bei den Bezugszeichen angegeben. Der dargestellten Ausführungsform ist ein kartesisches Koordinatensystem 51 zu Erläuterungszwecken zugeordnet, welches eine X-Achse 52 und eine Y-Achse 53 aufweist. In der dargestellten Ausführungsform sind Sensorleiterschleifen 31 aus zwei unterschiedlichen physikalischen Anordnungsebenen in der Sensorkarte dargestellt. Zu erkennen ist, dass die ansonsten hinsichtlich ihrer geometrischen Abmessungen identisch ausgebildeten Sensorleiterschleifen 31 der unterschiedlichen Ebenen sowohl in X- als auch in Y-Richtung gegenüber den Sensorleiterschleifen aus der anderen physikalischen Ebene versetzt sind. Flussanteile, welche senkrecht zur Zeichnungsebene orientiert sind, beeinflussen somit die unterschiedlichen Sensorleiterschleifen 31 unterschiedlich abhängig von der jeweiligen Position der magnetischen Materialien relativ zu den Sensorleiterschleifen 31 und abhängig von der jeweiligen Magnetisierung.

Besonders bevorzugt wird eine Anwendung, bei der die zur Magnetisierung verwendeten Ströme in den Anregungsleiterschleifen 36 zeitlich moduliert werden und die in den Sensorleiterschleifen erfassten Signale in zeitlicher Korrelation über eine Kreuzkorrelation ausgewertet wird. Hierdurch können beispielsweise Störfelder, welche ebenfalls durch die Magnetsensoren erfasst werden, eliminiert werden.

Anhand der Auswertung der einzelnen Messergebnisse der einzelnen Magnetsensoren wird in der Auswerte- und Steuereinrichtung 19 (vergleiche Fig. 2) ermittelt, ob das geprüfte Sicherheitsdokument ein erwartetes magnetisches Sicherheitsmerkmal umfasst. Ist beispielsweise der Wert einer Banknote codiert, so kann als Prüfergebnis beispielsweise dieser ermittelte Wert über eine der Schnittstellen 11-1 bis 11-3 ausgegeben werden. Ebenso ist es möglich, andere magnetisch codierte Informationen, welche ermittelt sind, auszugeben. Wird beispielsweise eine Seriennummer einer Banknote mittels einer Tinte gedruckt, welche magnetische Materialien umfasst, so ist bei entsprechend feingranularer Auflösung mittels der Magnetsensoren dessen Erfassung möglich. Diese kann dann ausgegeben werden, so dass der Nutzer oder die Auswerteund Steuereinrichtung diese mit der dargestellten, grafisch erfassbaren oder erfassten Banknotennummer vergleichen kann, sodass hierüber ein weiterer Verifikationsschritt ausgeführt wird.

Darüber hinaus ist es vorteilhaft, auch optisch erfassbare Sicherheitsmerkmale mittels der Sensorkarte 3 erfassen und gegebenenfalls auswerten zu können. Für diese Zwecke umfasst die Sensorkarte 3 die optische Messeinrichtung 22 (vergleiche Fig. 2).

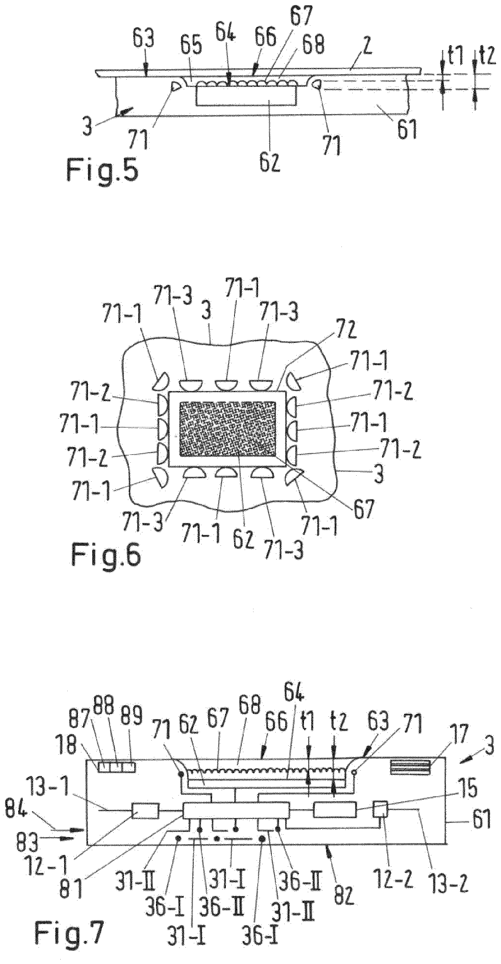

In Fig. 5 ist eine Schnittansicht eines Ausschnitts einer Sensorkarte 3 schematisch dargestellt. Die Sensorkarte 3 umfasst einen Kartenkörper 61, welcher beispielsweise aus einem oder mehreren Kunststoffmaterialien hergestellt ist. In diesen Kartenkörper 61 ist ein photoempfindlicher Sensor 62 integriert, welcher ausgebildet ist, zweidimensional aufgelöst Bildpunkte zu erfassen. Der photoempfindliche Sensor 62 wird auch als optischer Sensor bezeichnet. Bei dem photoempfindlichen Sensor 62 kann es sich somit beispielsweise um einen CCD-Chip oder einen beliebigen anderen Kamerasensor handeln, welcher in seiner Bauform so ausgebildet ist, dass er in einen kartenförmigen Kartenkörper 61 integriert werden kann. Der photoempfindliche Sensor 62 ist in den Kartenkörper 61 so integriert, dass zwischen einer Oberfläche 63 des Kartenkörpers und einer Detektionsseite 64 des photoempfindlichen Sensors 62 Kartenkörpermaterial 65 angeordnet ist, welches für die zu erfassende elektromagnetische Strahlung transparent ist. Die Oberfläche 63 des Kartenkörpers 61 bildet die Auflagefläche 66 für das zu überprüfende Sicherheitsdokument 2. Zwischen der Auflagefläche 66 und dem photoempfindlichen Sensor 62 ist in der dargestellten Ausführungsform ein Mikrolinsenarray 67 ausgebildet. Dies sorgt dafür, dass einzelne Bereiche der Auflagefläche 66 bzw. eines daran angrenzend angeordneten Dokuments 2 auf einzelne Pixel, d.h. Bildpunkte, des photoempfindliche Sensors 62 abgebildet werden. Ein solches Mikrolinsenarray 67 kann ausgebildet werden, wenn Stoffe verwendet werden, welche einen unterschiedlichen Brechungsindex aufweisen. Jenes Kunststoffmaterial, welches einen höheren Brechungsindex aufweist, wird als Mikrolinsenarray 67 ausgebildet. Das Kunststoffmaterial mit dem geringeren Brechungsindex wird als Schutzabdeckung 68 aufgetragen, so dass deren Oberfläche die Auflagefläche 66 bildet.

Um das auf der Auflagefläche 66 aufliegende Dokument 2 zumindest teilflächig beleuchten zu können, sind umlaufend um den photoempfindlichen Sensor 62 Leuchtmittel 71 angeordnet. Diese sind bezogen auf die Auflagefläche 66 in einer geringeren Tiefe T1 als der photoempfindliche Sensor 62 angeordnet, welcher in einer Tiefe T2 angeordnet ist.

In Fig. 6 ist eine schematische Draufsicht auf einen Ausschnitt der Sensorkarte 3 nach Fig. 5 schematisch dargestellt. Zu erkennen ist in der Mitte der flächig ausgebildete, zweidimensional Bildpunkte erfassende photoempfindliche Sensor 62 mit dem davor angeordneten Mikrolinsenarray 67. Umlaufend um einen Rand 72 sind unterschiedliche Leuchtmittel 71 angeordnet. Diese Leuchtmittel 71 umfassen unterschiedliche Gruppen von Leuchtmitteln 71-1 bis 71-3, welche Licht in unterschiedlichen Wellenlängenbereichen erzeugen. Die Leuchtmittel 71-1 einer ersten Gruppe erzeugen beispielsweise Weißlicht.

Die Leuchtmittel 71-2 einer zweiten Gruppe erzeugen beispielsweise infrarotes Licht und die Leuchtmittel 71-3 einer dritten Gruppe erzeugen beispielsweise Licht im UV-A-Wellenlängenbereich. Die unterschiedlichen Leuchtmittel 71 können beispielsweise als Leuchtdioden ausgebildet sein. Zur Erzeugung eines Weißlichtspektrums können gegebenenfalls zusätzlich Lumineszenzpigmente in die entsprechenden Leuchtmittel 71-1 integriert sein, welche eine breitbandige Lichtemission im sichtbaren Wellenlängenbereich bewirken.

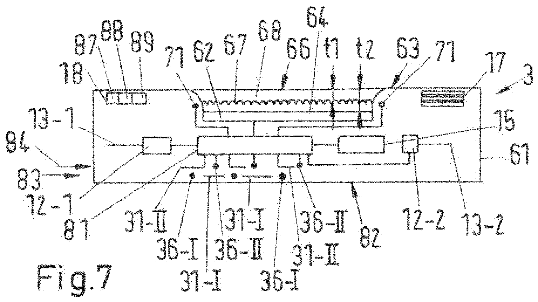

In Fig. 7 ist schematisch eine Schnittansicht durch eine Sensorkarte 3 exemplarisch dargestellt. Die Sensorkarte 3 umfasst einen Kartenkörper 61, welcher beispielsweise in einem Spritzgussverfahren oder in einem Laminationsverfahren aus mehreren Kunststoffschichten hergestellt ist. Im Innern des Kartenkörpers 61 sind die Auswerte- und Steuereinrichtung sowie der Speicher in einer integrierten Schaltung 81 ausgebildet. An einer ersten Oberfläche 63 des Kartenkörpers 61 ist die Auflagefläche 66 ausgebildet, unterhalb derer ein Mikrolinsenarray 67 sowie ein zweidimensional Bildpunkte auflösender photoempfindliche Sensor 62 angeordnet sind. An der der einen Oberfläche 63 gegenüberliegenden Oberfläche 82 sind in mehreren Anordnungsebenen 83, 84 Sensorleiterschleifen 31 sowie Anregungsleiterschleifen 37 angeordnet.

Im Innern des Kartenkörpers 61 sind darüber hinaus Antennen 13-1 und 13-2 sowie die elektronischen Schaltungen 12-1 und 12-2 von zwei Schnittstellen 11-1, 11-2 für eine drahtlose Nahbereichskommunikation, beispielsweise für eine NFC-Kommunikation und für eine Bluetooth-Kommunikation angeordnet. Die Antenne 13-2 kann darüber hinaus genutzt werden, um einen Akkumulator 15 aufzuladen, der als Energiequelle der Sensorkarte 3 dient.

Die Sensorkarte 3 weist zusätzlich eine Schnittstelle 11-3 auf, die eine Bedieneinrichtung 18 darstellt, welche beispielsweise in Form von mehreren kapazitiv betätigbaren Schaltelementen 87 bis 89 ausgebildet ist. Über diese können Steuerbefehle seitens eines Nutzers an die Auswerte- und Steuereinrichtung in dem integrierten Schaltkreis 81 übermittelt werden. Ein Prüfergebnis kann über eine als LCD ausgebildete Anzeigeeinrichtung 17 ausgegeben werden. Alternativ kann die Ausgabe über eine der beiden für eine drahtlose Kommunikation ausgebildeten Schnittstellen 11-1 und 11-2 erfolgen. Über diese können auch Steuerbefehle erfasst werden. Wird ein zu prüfendes Sicherheitsdokument anliegend an die gegenüberliegende Oberfläche 82 angeordnet, so kann dieses auf magnetische Sicherheitsmerkmale überprüft werden.

Wird hingegen das Sicherheitsdokument anliegend an die Auflagefläche 66 angeordnet, so kann zumindest ein Abschnitt des Dokuments in Form einer oder mehrerer Abbildungen erfasst werden. Hierzu können die Leuchtmittel 71 so betrieben werden, dass sie die Auflagefläche 66 bzw. ein daran angrenzendes Sicherheitsdokument beleuchten. Die Beleuchtung kann zeitgleich oder nacheinander mit unterschiedlichen Wellenlängen erfolgen, wobei eine oder mehrere Abbildungen erfasst werden können. Die Auswertung der Abbildungsdaten kann in der Auswerte- und Steuereinrichtung in dem integrierten Schaltkreis 81 erfolgen oder in einem Mobilfunktelefon (nicht dargestellt), dem die Abbildungsdaten über eine der Schnittstellen 11-1, 11-2 übermittelt werden. Die Auswertung der von den Magnetsensoren 31 erfassten Signale wird in der Auswerte- und Steuereinrichtung ausgeführt, die in dem integrierten Schaltkreis 81 ausgebildet ist.

Es versteht sich, dass lediglich beispielhafte Ausführungsformen beschrieben sind. Die Sensorkarte wird vorzugsweise hinsichtlich ihrer Abmessungen so ausgebildet, dass diese denen einer ID1- oder ID2-Karte entsprechen. Gegebenenfalls kann eine Materialstärke etwas größer ausfallen, als dieses für ID1- oder ID2-Sicherheitsdokumente vorgesehen ist.

Die einzelnen Leiterbahnen, welche die Sensorleiterschleifen oder Erregerleiterschleifen bilden, können in unterschiedlichen Fertigungstechniken auf unterschiedliche Lagen von Kunststoffmaterial aufgedampft und/oder aufgedruckt oder mittels anderer Verfahren aufgebracht werden. Die mehrlagig ausgebildeten Leiterschleifenanordnungen werden dann vorzugsweise in den Kartenkörper während eines Spritzguss- und/oder Spritzprägeverfahrensschritts und/oder einem Laminationsschritt in den Kartenkörper integriert. Um eine genaue Anordnung der einzelnen Bestandteile im Innern des Kartenkörpers von außen unsichtbar zu machen, kann das Kunststoffmaterial opak für sichtbares Licht ausgebildet sein. Lediglich der Materialbereich zwischen der Auflagefläche und dem photoempfindlichen Sensor muss selbstverständlich für die Wellenlängenbereiche transparent sein, für die Abbildungsdaten erfasst werden sollen bzw. Wellenlängenbereiche, welche für eine Anregung und Beleuchtung der Dokumentoberfläche genutzt werden sollen.

Die in den einzelnen Ausführungsformen beschriebenen Merkmale können in beliebiger Kombination zur Verwirklichung der Erfindung herangezogen werden. Die beschriebenen Ausführungsformen benutzen als Magnetsensoren Leiterschleifen. Andere Ausführungsformen können jedoch andere Magnetsensoren vorsehen, wie sie im Stand der Technik bekannt und/oder oben erwähnt sind.

### Bezugszeichenliste

- 1: Prüfsystem
- 2: Sicherheitsdokument
- 2a: Ausweisdokument
- 2b: Banknote
- 3: Sensorkarte
- 4: Mobilfunktelefon
- 5: drahtlose Kommunikationsverbindung
- 11-1: Sensorkartenschnittstelle (Bluetooth)
- 11-2: Sensorkartenschnittstelle (NFC-Schnittstelle)
- 11-3: weitere Schnittstelle
- 12-1, 12-2: integrierte Schaltungen
- 13-1, 13-2: Antennen
- 14: Spannungsversorgung
- 15: Batterie/Akkumulator
- 16: Energiequelle
- 17: Anzeigeeinrichtung
- 18: Bedieneinrichtung
- 19: Auswerte- und Steuereinrichtung
- 20: Speicher
- 21: magnetische Messeinrichtung
- 22: optische Messeinrichtung
- 31: Sensorleiterschleife
- 32: Magnetsensoren
- 33: Leitungsstränge
- 34, 35: Kontaktstellen
- 36: Anregungsleiterschleife
- 51: Koordinatensystem
- 52: X-Achse
- 53: Y-Achse
- 61: Kartenkörper
- 62: photoempfindlicher Sensor
- 63: Oberfläche des Kartenkörpers
- 64: Detektionsseite
- 65: Kartenkörpermaterial
- 66: Auflagefläche
- 67: Mikrolinsenarray
- 68: Schutzabdeckung
- 71: Leuchtmittel
- t1: Tiefe (Anordnung der Leuchtmittel)
- t2: Tiefe (des photoempfindlichen Sensors)
- 72: Rand
- 81: integrierte Schaltung
- 82: gegenüberliegende Oberfläche
- 83, 84: Anordnungsebenen
- 87-89: Schaltelemente

## Patentansprüche

1. Sensorkarte (3) für eine Dokumentprüfung umfassend:
einen aus einem oder mehreren Kunststoffmaterialien hergestellten Kartenkörper (61), in dessen Inneres
eine Energiequelle (16),
mindestens eine magnetische Anregungseinheit,
mehrere Magnetsensoren (32),
eine Auswerte- und Steuereinrichtung (19) sowie
mindestens eine Schnittstelle (11-1 bis 11-3) zum Empfangen von Steuerbefehlen und/oder Ausgeben von Prüfergebnissen integriert sind,
wobei die Auswerte- und Steuereinrichtung (19) ausgebildet ist, auf einen von der Schnittstelle (11-1 bis 11-3) empfangenen Steuerbefehl die mindestens eine magnetische Anregungseinheit zu aktivieren, so dass angrenzend an mindestens eine Oberfläche (82) des Kartenkörpers (62) ein magnetischer Fluss verändert wird, und mindestens einen der mehreren Magnetsensoren (32) auszulesen, und das Messergebnis auszuwerten, um zu prüfen, ob in einem Messgebiet angrenzend an die eine Oberfläche des Kartenkörpers, in dem der magnetische Fluss verändert wird oder wurde, magnetische Materialien angeordnet sind, und über die mindestens eine Schnittstelle (11-1 bis 11-3) das Prüfergebnis auszugeben.

2. Sensorkarte (3) nach Anspruch 1, **dadurch gekennzeichnet, dass** die mehreren Magnetsensoren jeweils als ebene, eine Leiterschleifenebene aufweisende Sensorleiterschleifen (31) ausgebildet sind.

3. Sensorkarte (3) nach Anspruch 2, **dadurch gekennzeichnet, dass** die mehreren Sensorleiterschleifen (31) in mehreren Anordnungsebenen (83, 84) in dem Kartenkörper (61) angeordnet sind, wobei sich die auf die eine Oberfläche (82) senkrecht projizierten Leiterschleifenabbilder überlappen.

4. Sensorkarte (3) nach einem der vorangehenden Ansprüche, **dadurch gekennzeichnet, dass** im Innern des Kartenkörpers (61) zusätzlich ein zweidimensional Bildpunkte auflösender, flächig ausgebildeter photoempfindlicher Sensor (62) angeordnet ist, wobei der Kartenkörper (61) zwischen einer Auflagefläche (66) und einer Detektionsseite (64) des photoempfindlichen Sensors (62) für Licht mindestens einen Wellenlängenbereichs transparent ausgebildet ist und benachbart zu dem photoempfindlichen Sensor (62) im Kartenkörper (61) Leuchtmittel (71) angeordnet sind, mit welchen ein auf der Auflagefläche (66) anliegender Gegenstand beleuchtbar ist, und die Steuer- und Auswerteeinheit (19) ausgebildet ist, auf einen weiteren Steuerbefehl alternativ oder zusätzlich die Leuchtmittel (71) anzusteuern, um die Auflagefläche (66) zu beleuchten, und mittels des photoempfindlichen Sensors (62) mindestens eine Abbildung der Auflagefläche (66) zu erfassen und die Abbildungsdaten entweder einerseits auszuwerten und ein Auswertungsergebnis über die mindestens eine Sensorkartenschnittstelle (11-1 bis 11-3) auszugeben oder andererseits die Abbildungsdaten über die mindestens eine Sensorkartenschnittstelle (11-1 bis 11-3) auszugeben.

5. Sensorkarte (3) nach Anspruch 4, **dadurch gekennzeichnet, dass** die Leuchtmittel (71) in einer geringeren Tiefe (t1) als der photoempfindliche Sensor (62) bezüglich der Auflagefläche (66) in dem Kartenkörper (61) angeordnet sind.

6. Sensorkarte (3) nach einem der Ansprüche 4 oder 5, **dadurch gekennzeichnet, dass** ein Mikrolinsenarray (67) angrenzend an den photoempfindlichen Sensor (62) im Inneren des Kartenkörpers (61) ausgebildet ist.

7. Sensorkarte (3) nach einem der vorangehenden Ansprüche, **dadurch gekennzeichnet, dass** die magnetische Anregungseinheit eine oder mehrere als Anregungsleiterschleifen (36) bezeichnete Leiterschleifen umfasst.

8. Sensorkarte (3) nach Anspruch 7, **dadurch gekennzeichnet, dass** in einer der mehreren Anordnungsebenen (83, 84), in der mehrere der als Sensorleiterschleifen (31) ausgebildeten Magnetsensoren (32) angeordnet sind, deren Leiterschleifenebenen mit der einen der mehreren Anordnungsebenen (83, 84) zusammenfallen, auch die eine oder die mehreren Anregungsleiterschleifen (36) ausgebildet sind.

9. Sensorkarte (3) nach Anspruch 8, **dadurch gekennzeichnet, dass** eine als Anregungseinheit genutzte Anregungsleiterschleife (36) der einen oder der mehreren Anregungsleiterschleifen (36) mehrere der als Magnetsensoren (32) genutzten Sensorleiterschleifen (31) umschließt.

10. Verifikationssystem für Sicherheitsdokumente (2) umfassend eine Sensorkarte (3) nach einem der vorangehenden Ansprüche sowie ein Mobiltelefon (4) mit mindestens einer Eingabevorrichtung, mindestens einer Ausgabevorrichtung, einer programmgesteuerten Prozessoreinheit, einem Speicher sowie einer zu der mindestens einen Sensorkartenschnittstelle der Sensorkarte (3) kompatiblen Schnittstelle, wobei in dem Speicher eine in Software ausgeführte Applikation gespeichert ist, bei deren Aufruf und Ausführung auf der Prozessoreinheit über die Schnittstelle des Mobilfunktelefons (4) und die mindestens eine Sensorkartenschnittstelle (11-1 bis 11-2) eine Kommunikationsverbindung (5) aufgebaut und mindestens der eine Steuerbefehl und/oder der weitere Steuerbefehl übermittelbar ist, um eine magnetische und/oder optische Prüfung eines anliegend an die Sensorkarte (3) angeordneten Sicherheitsdokuments auszulösen, und das Prüfergebnis und/oder die Abbildungsdaten erfassbar sind, wobei die Applikation ausgebildet ist, das Prüfergebnis über die mindestens eine Ausgabevorrichtung auszugeben, wobei das Prüfergebnis mittels einer durch die Applikation auf der Prozessoreinheit ausgeführten Auswertung der Abbildungsdaten abgeleitet wird, sofern diese zu dem Mobiltelefon (4) unausgewertet übertragen werden.

11. Verfahren zum Prüfen eines Sicherheitsdokuments (2) mittels einer Sensorkarte (3) nach einem der Ansprüche 1 bis 9 umfassend die Schritte:
Erfassen oder Empfangen eines Steuerbefehls,
Aktivieren der mindestens einen magnetischen Anregungseinheit, so dass angrenzend an die mindestens eine Oberfläche des Kartenkörpers (61) ein magnetischer Fluss verändert wird,
Auslesen mindestens eines der mehreren Magnetsensoren (32),
Auswerten des mindestens einen ausgelesenen Messergebnisses,
um zu prüfen, ob in einem Messgebiet angrenzend an die eine Oberfläche des Kartenkörpers (61) magnetische Materialien angeordnet sind, und
Ausgeben des Prüfergebnisses über die mindestens eine Sensorkartenschnittstelle (11-1 bis 11-3).

12. Verfahren nach Anspruch 11, **dadurch gekennzeichnet, dass** ein weiterer Steuerbefehl mittels der mindestens einen Sensorkartenschnittstelle (11-1 bis 11-3) erfasst oder empfangen wird und mittels eines zweidimensional aufgelöste Bildpunkte erfassenden photoempfindlichen Sensors (62) eine Abbildung eines an eine Auflagefläche (66) der Sensorkarte (3) anliegenden Gegenstandes erfasst und ausgewertet wird.

13. Verfahren nach einem der Ansprüche 11 oder 12, **dadurch gekennzeichnet, dass** ein Mobiltelefon (4) die Steuerbefehle an die Sensorkarte (3) übermittelt und so den Prüfablauf auf der Sensorkarte (3) auslöst.

14. Verfahren nach einem der Ansprüche 11 bis 13, **dadurch gekennzeichnet, dass** das zu prüfende Sicherheitsdokument (2) und die Sensorkarte (3) miteinander in Kontakt gebracht werden.

15. Verfahren nach einem der Ansprüche 11 bis 14, **dadurch gekennzeichnet, dass** als die mehreren Magnetsensoren (32) Sensorleiterschleifen (31) verwendet werden und die Anregungseinheit mehrere Anregungsleiterschleifen (36) umfasst, welche gezielt aktiv zur Anregung genutzt werden, um die Anregung relativ zu den einzelnen als Magnetsensoren (32) verwendeten Sensorleiterschleifen (31) zu variieren, so dass eine lokalisierte Messung der magnetischen Eigenschaften anliegend an die Oberfläche des Kartenkörpers (61) der Sensorkarte (3) ausgeführt wird.

## Claims

1. A sensor card (3) for document examination, comprising:
a card body (61) produced from one or more plastic materials, in the interior of which there are integrated
a power source (16),
at least one magnetic excitation unit,
a plurality of magnetic sensors (32),
an evaluation and control unit (19), and
at least one interface (11-1 to 11-3) for receiving control commands and/or outputting examination results,
wherein the evaluation and control unit (19) is designed to activate the at least one magnetic excitation unit such that, upon a control command being received by the interface (11-1 to 11-3), a magnetic flux is modified adjacently to at least one surface (82) of the card body (62), and to read out at least one of the plurality of magnetic sensors (32), and to evaluate the measurement result in order to examine whether there are magnetic materials arranged in a measurement area adjacent to the at least one surface of the card body where the magnetic flux is or was modified, and to output the examination result by means of the at least one interface (11-1 to 11-3).

2. The sensor card (3) according to claim 1, **characterised in that** the plurality of magnetic sensors are each formed as planar sensor conductor loops (31) having a conductor loop plane.

3. The sensor card (3) according to claim 2, **characterised in that** the plurality of sensor conductor loops (31) are arranged in the card body (61) in a plurality of arrangement planes (83, 84), wherein the conductor loop images projected perpendicularly onto the at least one surface (82) overlap one another.

4. The sensor card (3) according to any one of the preceding claims, **characterised in that** a flat photosensitive sensor (62) that resolves pixels two-dimensionally is additionally arranged within the card body (61), wherein the card body (61) is transparent for light of at least one wavelength range between a support face (66) and a detection side (64) of the photosensitive sensor (62) and illuminants (71) are arranged in the card body (61) adjacently to the photosensitive sensor (62), with which illuminants an object resting on the support face (66) can be illuminated, and the control and evaluation unit (19) is designed to actuate the illuminants (71) alternatively or additionally, upon a further control command, in order to illuminate the support face (66) and to detect at least one imaging of the support face (66) by means of the photosensitive sensor (62) and to either, on the one hand, evaluate the imaging data and output an evaluation result by means of the at least one sensor card interface (11-1 to 11-3) or, on the other hand, to output the imaging data by means of the at least one sensor card interface (11-1 to 11-3)

5. The sensor card (3) according to claim 4, **characterised in that** the illuminants (71) are arranged in the card body (61) at a shorter depth (t1) than the photosensitive sensor (62) in relation to the support face (66).

6. The sensor card (3) according to any one of claims 4 or 5, **characterised in that** a micro lens array (67) is formed within the card body (61) adjacently to the photosensitive sensor (62).

7. The sensor card (3) according to any one of the preceding claims, **characterised in that** the magnetic excitation unit comprises one or several conductor loops referred to as excitation conductor loops (36).

8. The sensor card (3) according to claim 7, **characterised in that** the one or the several excitation conductor loops (36) are also formed in one or several arrangement planes (83, 84), in which a plurality of the magnetic sensors (32) formed as sensor conductor loops (31) are arranged, the conductor loop planes of said magnetic sensors coinciding with the one or the several arrangement planes (83, 84).

9. The sensor card (3) according to claim 8, **characterised in that** an excitation conductor loop (36) of the one or the several excitation conductor loops (36), which is used as an excitation unit, surrounds a plurality of the sensor conductor loops (31) used as magnetic sensors (32).

10. A verification system for security documents (2), comprising a sensor card (3) according to any one of the preceding claims and a mobile telephone (4) with at least one input device, at least one output device, a program-controlled processor unit, a memory, and an interface compatible with the at least one sensor card interface of the sensor card (3), wherein an application run in software is stored in the memory and a communications link (5) is established when said application is called up and run on the processor unit by means of the interface of the mobile telephone (4) and the at least one sensor card interface (11-1 to 11-2), and at least the one control command and/or the further control command can be transmitted in order to trigger a magnetic and/or optical examination of a security document arranged adjacently to the sensor card (3), and the examination result and/or the imaging data can be detected, wherein the application is designed to output the examination result by means of the at least one output device, wherein the examination result is derived by means of an evaluation of the imaging data performed by the application on the processor unit, if this data is transmitted to the mobile telephone (4) without having been evaluated.

11. A method for examining a security document (2) by means of a sensor card (3) according to any one of claims 1 to 9, comprising the following steps:
detecting or receiving a control command,
activating the at least one magnetic excitation unit so that a magnetic flux is modified adjacently to the at least one surface of the card body (61),
reading out at least one of the plurality of magnetic sensors (32),
evaluating the at least one read-out measurement result so as to examine whether magnetic materials are arranged in a measurement area adjacent to the at least one surface of the card body (61), and
outputting the examination result by means of the at least one sensor card interface (11-1 to 11-3).

12. The method according to claim 11, **characterised in that** a further control command is detected or received by means of the at least one sensor card interface (11-1 to 11-3) and an imaging of an object resting on a support face (66) of the sensor card (3) is detected and evaluated by means of a photosensitive sensor (62) that detects two-dimensionally resolved pixels.

13. The method according to any one of claims 11 or 12, **characterised in that** a mobile telephone (4) transmits the control commands to the sensor card (3) and thus triggers the examination process at the sensor card (3).

14. The method according to any one of claims 11 to 13, **characterised in that** the security document (2) to be examined and the sensor card (3) are brought into contact with one another.

15. The method according to any one of claims 11 to 14, **characterised in that** sensor conductor loops (31) are used as the plurality of magnetic sensors (32) and the excitation unit comprises a plurality of excitation conductor loops (36), which are used on purpose actively for excitation, in order to vary the excitation relative to the individual sensor conductor loops (31) used as magnetic sensors (32), so that a localised measurement of the magnetic properties resting on the surface of the card body (61) of the sensor card (3) is performed.

## Revendications

1. Carte capteur (3) pour un contrôle de document comportant :
un corps de carte (61), fabriqué à partir d'un ou de plusieurs matériaux synthétiques, à l'intérieur duquel sont intégrés
une source d'énergie (16),
au moins une unité d'excitation magnétique,
plusieurs capteurs magnétiques (32),
une unité d'évaluation et de commande (19) ainsi que au moins une interface (11-1 à 11-3) pour la réception d'instructions de commande et/ou la fourniture de résultats de contrôle,
dans laquelle l'unité d'évaluation et de commande (19) est conçue pour activer l'au moins une unité d'excitation magnétique suite à une instruction de commande reçue par l'interface (11-1 à 11-3) de sorte que, à proximité d'au moins une surface supérieure (82) du corps de carte (62), est modifié un flux magnétique, et pour lire au moins un des plusieurs capteurs magnétiques (32) et pour évaluer le résultat de mesure afin de vérifier si, dans un domaine de mesure à proximité de la surface supérieure du corps de carte, dans lequel le flux magnétique est ou a été modifié, sont disposés des matériaux magnétiques, et pour fournir le résultat de contrôle par le biais de l'au moins une interface (11-1 à 11-3).

2. Carte capteur (3) selon la revendication 1, **caractérisée en ce que** les plusieurs capteurs magnétiques sont conçus chacun en tant que boucles conductrices de capteur (31) planes présentant un plan de boucle conductrice.

3. Carte capteur (3) selon la revendication 2, **caractérisée en ce que** les plusieurs boucles conductrices de capteur (31) sont disposées dans plusieurs plans d'agencement (83, 84) dans le corps de carte (61), dans laquelle les représentations de boucle conductrice projetées verticalement sur l'au moins une surface supérieure (82) se recouvrent en partie.

4. Carte capteur (3) selon l'une quelconque des revendications précédentes, **caractérisée en ce que**, à l'intérieur du corps de carte (61), est disposé en plus un capteur photosensible (62) de forme plane, à résolution bidimensionnelle de points d'image, dans laquelle le corps de carte (61) est conçu, entre une surface d'appui (66) et un côté de détection (64) du capteur photosensible (62), transparent à une lumière d'au moins un domaine de longueurs d'ondes et au voisinage du capteur photosensible (62) dans le corps de carte (61) sont disposés des moyens d'éclairage (71) avec lesquels un objet reposant contre la surface d'appui (66) peut être éclairé, et l'unité d'évaluation et de commande (19) est conçue pour commander, suite à une autre instruction de commande, en variante ou en supplément, les moyens d'éclairage (71) pour éclairer la surface d'appui (66) et pour détecter au moyen du capteur photosensible (62) au moins une image de la surface d'appui (66) et soit d'une part, pour évaluer les données d'image et fournir un résultat d'analyse par le biais de l'au moins une interface (11-1 à 11-3) de la carte capteur, soit d'autre part, pour fournir les données d'image par le biais de l'au moins une interface (11-1 à 11-3) de la carte capteur.

5. Carte capteur (3) selon la revendication 4, **caractérisée en ce que** les moyens d'éclairage (71) sont disposés dans le corps de carte (61) à une moindre profondeur (t1) que le capteur photosensible (62) par rapport à la surface d'appui (66).

6. Carte capteur (3) selon l'une quelconque des revendications 4 ou 5, **caractérisée en ce qu'**un réseau de microlentilles (67) est conçu à l'intérieur du corps de carte (61) à proximité du capteur photosensible (62).

7. Carte capteur (3) selon l'une quelconque des revendications précédentes, **caractérisée en ce que** l'unité d'excitation magnétique comporte une ou plusieurs boucles conductrices désignées en tant que boucles conductrices d'excitation (36).

8. Carte capteur (3) selon la revendication 7, **caractérisée en ce que**, dans un des plusieurs plans d'agencement (83, 84), dans lequel sont disposés plusieurs des capteurs magnétiques (32) en tant que boucles conductrices de capteur (31), dont les plans de boucle conductrice coïncident avec l'un des plusieurs plans d'agencement (83, 84), sont conçues également l'une ou les plusieurs boucles conductrices d'excitation (36).

9. Carte capteur (3) selon la revendication 8, **caractérisée en ce qu'**une boucle conductrice d'excitation (36), utilisée en tant qu'unité d'excitation, de l'une ou des plusieurs boucles conductrices d'excitation (36) entoure plusieurs des boucles conductrices de capteur (31) utilisées en tant que capteurs magnétiques (32).

10. Système de vérification pour des documents de sécurité (2) comportant une carte capteur (3) selon l'une quelconque des revendications précédentes ainsi qu'un téléphone mobile (4) avec au moins un dispositif d'entrée, au moins un dispositif de fourniture, une unité de processeur commandée par programme, une mémoire ainsi qu'une interface compatible avec l'au moins une interface de carte capteur de la carte capteur (3), dans lequel, dans la mémoire est stockée une application, exécutée selon un logiciel, lors de l'appel et de l'exécution de laquelle une liaison de communication (5) est établie sur l'unité de processeur par le biais de l'interface du téléphone mobile (4) et de l'au moins une interface de carte capteur (11-1 à 11-2), et l'au moins une instruction de commande et/ou l'autre instruction de commande peut être transférée pour déclencher un contrôle magnétique et/ou optique d'un document de sécurité disposé reposant contre la carte capteur (3), et le résultat de contrôle et/ou les données d'image peuvent être détectés, dans lequel l'application est conçue pour fournir le résultat de contrôle par le biais de l'au moins un dispositif de fourniture, dans lequel le résultat de contrôle est déduit au moyen d'une évaluation des données d'image exécutée par l'application sur l'unité de processeur dans la mesure où celles-ci sont transmises non évaluées au téléphone mobile (4).

11. Procédé de contrôle d'un document de sécurité (2) au moyen d'une carte capteur (3) selon l'une quelconque des revendications précédentes 1 à 9, comportant les étapes :
détection ou réception d'une instruction de commande,
activation de l'au moins une unité d'excitation magnétique de sorte qu'un flux magnétique est modifié à proximité de l'au moins une surface supérieure du corps de carte (61),
lecture d'au moins un des plusieurs capteurs magnétiques (32),
évaluation de l'au moins un résultat de mesure lu pour contrôler si, dans un domaine de mesure, des matériaux magnétiques sont disposés à proximité de la surface supérieure du corps de carte (61), et
fourniture du résultat de contrôle par le biais de l'au moins une interface de carte capteur (11-1 à 11-3).

12. Procédé selon la revendication 11, **caractérisé en ce qu'**une autre instruction de commande est détectée ou reçue au moyen de l'au moins une interface de carte capteur (11-1 à 11-3) et, au moyen d'un capteur photosensible (62) détectant des points d'image ayant une résolution bidimensionnelle, une image d'un objet reposant contre une surface d'appui (66) de la carte capteur (3) est détectée et évaluée.

13. Procédé selon l'une quelconque des revendications 11 ou 12, **caractérisé en ce qu'**un téléphone mobile (4) transfère les instructions de commande à la carte capteur (3) et déclenche ainsi la procédure de contrôle sur la carte capteur (3).

14. Procédé selon l'une quelconque des revendications 11 à 13, **caractérisé en ce que** le document de sécurité (2) à contrôler et la carte capteur (3) sont mis en contact l'un avec l'autre.

15. Procédé selon l'une quelconque des revendications 11 à 14, **caractérisé en ce que** des boucles conductrices de capteur (31) sont employées en tant que les plusieurs capteurs magnétiques (32) et l'unité d'excitation comporte plusieurs boucles conductrices d'excitation (36) qui sont utilisées de manière active et précise pour l'excitation afin de varier l'excitation relativement aux différentes boucles conductrices de capteur (31) employées en tant que capteurs magnétiques (32) de sorte à exécuter une mesure localisée des propriétés magnétiques présentes à la surface supérieure du corps de carte (61) de la carte capteur (3).
